(19) Europäisches Patentamt
European Patent Office
Office européen des brevets

(11) **EP 4 741 128 A1**

(12) **EUROPEAN PATENT APPLICATION**
published in accordance with Art. 153(4) EPC

(43) Date of publication:
**13.05.2026 Bulletin 2026/20**

(21) Application number: 25795011.3

(22) Date of filing: **18.04.2025**

(51) International Patent Classification (IPC):
**B26D 7/32** (2006.01)   **B26D 1/24** (2006.01)
**B26D 5/00** (2006.01)   **H01M 4/04** (2006.01)

(52) Cooperative Patent Classification (CPC):
**B26D 1/24; B26D 5/00; B26D 7/32; H01M 4/04**

(86) International application number:
**PCT/KR2025/005297**

(87) International publication number:
**WO 2025/225973 (30.10.2025 Gazette 2025/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.04.2024 KR 20240053917**

(71) Applicant: **LG Energy Solution, Ltd.
Seoul 07335 (KR)**

(72) Inventor: **KIM, Byeong Jo
Daejeon 34122 (KR)**

(74) Representative: **Plasseraud IP
104 Rue de Richelieu
CS92104
75080 Paris Cedex 02 (FR)**

(54) **SLITTER**

(57) The present disclosure provides a slitter. The slitter includes a cutter configured to divide material into a first exit part and a second exit part, an entry roll configured to adjust an angle of entry formed by an entry part of the material approaching the cutter with respect to a reference plane, a first distance measurement sensor configured to detect a vertical moving distance of the entry roll, a first exit roll configured to adjust a first angle of exit formed by the first exit part of the material with respect to the reference plane, a second distance measurement sensor configured to detect a vertical moving distance of the first exit roll, a second exit roll configured to adjust a second angle of exit formed by the second exit part of the material with respect to the reference plane, and a third distance measurement sensor configured to detect a vertical moving distance of the second exit roll.

[FIG. 3]

**Description**

[Technical Field]

The present disclosure relates to a slitter.

This application claims the benefit of priority based on Korean Patent Application No. 10-2024-0053917, filed on April 23, 2024, and the entire content of the Korean patent application is incorporated herein by reference.

[Background Art]

A slitting process is a process of cutting material by a knife in a direction parallel to a moving direction of the material to divide the material into a plurality of segments. In the slitting process, angles of entry and exit of the material are major factors of the slitting process that affect the quality of a cut surface of the material and the occurrence of defects such as burrs. The angles of entry and exit of the material include an angle of entry formed by the material approaching the knife with respect to an arbitrary reference plane and angles of exit formed by the segments of the material away from the knife with respect to the reference plane. In order to improve the reliability of a product manufactured through the slitting process, it is required to accurately monitor the angles of entry and exit of the material.

[Disclosure]

[Technical Problem]

The present disclosure is directed to providing a slitter.

[Technical Solution]

An aspect of the present disclosure provides a slitter including: a cutter that includes a first knife and a second knife that are arranged in a vertical direction and is configured to cut material passing between the first knife and the second knife to divide the material into a first exit part and a second exit part; an entry roll configured to move in the vertical direction and adjust an angle of entry formed by an entry part of the material approaching the cutter with respect to a reference plane; a first distance measurement sensor configured to detect a vertical moving distance of the entry roll, the vertical moving distance being a distance by which the entry roll moves from the reference plane in the vertical direction; a first exit roll configured to move in the vertical direction and adjust a first angle of exit formed by the first exit part of the material with respect to the reference plane; a second distance measurement sensor configured to detect a vertical moving distance of the first exit roll, the vertical moving distance being a distance by which the first exit roll moves from the reference plane in the vertical direction; a second exit roll configured to move in the vertical direction and adjust a second angle of exit formed by the second exit part of the material with respect to the reference plane; and a third distance measurement sensor configured to detect a vertical moving distance of the second exit roll, the vertical moving distance being a distance by which the second exit roll moves from the reference plane in the vertical direction.

In embodiments, the slitter may further include a monitoring device configured to calculate the angle of entry, based on the vertical moving distance of the entry roll.

In embodiments, the monitoring device may be configured to calculate a first inter-contact-point distance between a contact point between the entry roll and the entry part of the material and a contact point between the first knife and the entry part of the material, based on the vertical moving distance of the entry roll, a horizontal distance between a center of the entry roll and a center of the first knife in a horizontal direction, a radius of the entry roll, and a radius of the first knife, and to calculate the angle of entry, based on the first inter-contact-point distance, the radius of the entry roll, and the radius of the first knife.

In embodiments, when the entry roll moves downward from the reference plane, the first inter-contact-point distance may be calculated by the following Equation (1):

$$L_{Id} = \sqrt{L_{Io}{}^2 + (h_I - R - r_I)^2 - (R + r_I)^2} \quad \ldots \text{Equation (1)}$$

In Equation (1), $L_{Id}$ denotes the first inter-contact-point distance, $L_{IO}$ denotes the horizontal distance between the center of the entry roll and the center of the first knife, $h_I$ denotes the vertical moving distance of the entry roll, $R$ denotes the radius of the first knife, and n denotes the radius of the entry roll, and when the entry roll moves downward from the reference plane, the angle of entry may be calculated by the following Equation (2):

$$\theta_{Id} = (-\sin^{-1}(\frac{R+r_I}{\sqrt{L_{Id}^2+(R+r_I)^2}}) + \cos^{-1}(\frac{L_{Io}}{\sqrt{L_{Id}^2+(R+r_I)^2}})) \times \frac{180}{\pi} \quad [degree]$$

$$\dots \text{ Equation (2)}$$

In Equation (2), $\theta_{Id}$ denotes the angle of entry.

In embodiments, when the entry roll moves upward from the reference plane, the first inter-contact-point distance may be calculated by the following Equation (3):

$$L_{Iu} = \sqrt{L_{Io}^2 + (h_I + R + r_I)^2 - (R + r_I)^2}$$

$$\dots \text{ Equation (3)}$$

In Equation (3), $L_{Iu}$ denotes the first inter-contact-point distance, $L_{IO}$ denotes the horizontal distance between the center of the entry roll and the center of the first knife, $h_I$ denotes the vertical moving distance of the entry roll, R denotes the radius of the first knife, and n denotes the radius of the entry roll, and when the entry roll moves upward from the reference plane, the angle of entry may be calculated by the following Equation (4):

$$\theta_{Iu} = (\sin^{-1}(\frac{h_I+R+r_I}{\sqrt{L_{Iu}^2+(R+r_I)^2}}) - \cos^{-1}(\frac{L_{Iu}}{\sqrt{L_{Iu}^2+(R+r_I)^2}})) \times \frac{180}{\pi} \quad [degree]$$

$$\dots \text{ Equation (4)}$$

In Equation (4), $\theta_{Iu}$ denotes the angle of entry.

In embodiments, the slitter may further include a monitoring device configured to calculate the first angle of exit, based on the vertical moving distance of the first exit roll.

In embodiments, the monitoring device may be configured to calculate a second inter-contact-point distance between a contact point between the first exit roll and the first exit part of the material and a contact point between the first knife and the first exit part of the material, based on the vertical moving distance of the first exit roll, a horizontal distance between a center of the first exit roll and a center of the first knife in the horizontal direction, a radius of the first exit roll, and a radius of the first knife, and to calculate the first angle of exit, based on the second inter-contact-point distance, the radius of the first exit roll, and the radius of the first knife.

In embodiments, when the first exit roll moves downward from the reference plane, the second inter-contact-point distance may be calculated by the following Equation (5):

$$L_{Ud} = \sqrt{L_{Uo}^2 + (h_U - R - r_U)^2 - (R + r_U)^2}$$

$$\dots \text{ Equation (5)}$$

In Equation (5), $L_{Ud}$ denotes the second inter-contact-point distance, Luo denotes the horizontal distance between the center of the first exit roll and the center of the first knife, hu denotes the vertical moving distance of the first exit roll, R denotes the radius of the first knife, and ru denotes the radius of the first exit roll, and when the first exit roll moves downward from the reference plane, the first angle of exit may be calculated by the following Equation (6):

$$\theta_{Ud} = (-\sin^{-1}(\frac{R+r_U}{\sqrt{L_{Ud}^2+(R+r_U)^2}}) + \cos^{-1}(\frac{L_{Uo}}{\sqrt{L_{Ud}^2+(R+r_U)^2}})) \times \frac{180}{\pi} \quad [degree]$$

$$\dots \text{ Equation (6)}$$

In Equation (6), $\theta_{Ud}$ denotes the first angle of exit.

In embodiments, when the first exit roll moves upward from the reference plane, the second inter-contact-point distance may be calculated by the following Equation (7):

$$L_{Uu} = \sqrt{L_{Uo}^2 + (h_U + R + r_U)^2 - (R + r_U)^2}$$

$$\dots \text{ Equation (7)}$$

In Equation (7), $L_{Uu}$ denotes the second inter-contact-point distance, Luo denotes the horizontal distance between the center of the first exit roll and the center of the first knife, hu denotes the vertical moving distance of the first exit roll, R denotes the radius of the first knife, and ru denotes the radius of the first exit roll, and when the first exit roll moves upward from the reference plane, the first angle of exit may be calculated by the following Equation (8):

$$\theta_{Uu} = (\sin^{-1}(\frac{h_U + R + r_U}{\sqrt{L_{Uu}^2 + (R + r_U)^2}}) - \cos^{-1}(\frac{L_{Uu}}{\sqrt{L_{Uu}^2 + (R + r_U)^2}})) \times \frac{180}{\pi} \, [degree]$$

... Equation (8)

In Equation (8), $\theta_{Uu}$ denotes the first angle of exit.

In embodiments, the slitter may further include a monitoring device configured to calculate the second angle of exit, based on the vertical moving distance of the second exit roll.

In embodiments, the monitoring device may be configured to calculate a third inter-contact-point distance between a contact point between the second exit roll and the second exit part of the material and a contact point between the first knife and the second exit part of the material, based on the vertical moving distance of the second exit roll, a horizontal distance between a center of the second exit roll and a center of the first knife in the horizontal direction, a radius of the second exit roll, and a radius of the first knife, and to calculate the second angle of exit, based on the third inter-contact-point distance, the radius of the second exit roll, and the radius of the first knife.

In embodiments, when the second exit roll moves downward from the reference plane, the third inter-contact-point distance may be calculated by the following Equation (9):

$$L_{Ld} = \sqrt{L_{Lo}^2 + (h_L - R + r_L)^2 - (R - r_L)^2}$$

... Equation (9)

In Equation (9), $L_{Ld}$ denotes the third inter-contact-point distance, $L_{LO}$ denotes the horizontal distance between the center of the second exit roll and the center of the first knife, $h_L$ denotes the vertical moving distance of the second exit roll, R denotes the radius of the first knife, and $r_L$ denotes the radius of the second exit roll, and when the second exit roll moves downward from the reference plane, the second angle of exit may be calculated by the following Equation (10):

$$\theta_{Ld} = (\cos^{-1}(\frac{h_L - R + r_L}{\sqrt{L_{Ld}^2 + (R - r_L)^2}}) - \cos^{-1}(\frac{L_{Ld}}{\sqrt{L_{Ld}^2 + (R - r_L)^2}})) \times \frac{180}{\pi} - 90 \, [degree]$$

... Equation (10)

In Equation (10), $\theta_{Ld}$ denotes the second angle of exit.

In embodiments, when the second exit roll moves upward from the reference plane, the third inter-contact-point distance may be calculated by the following Equation (11):

$$L_{Lu} = \sqrt{L_{Lo}^2 + (h_L + R - r_L)^2 - (R - r_L)^2}$$

... Equation (11)

In Equation (11), $L_{Lu}$ denotes the third inter-contact-point distance, $L_{LO}$ denotes the horizontal distance between the center of the second exit roll and the center of the first knife, $h_L$ denotes the vertical moving distance of the second exit roll, R denotes the radius of the first knife, and $r_L$ denotes the radius of the second exit roll, and when the second exit roll moves upward from the reference plane, the second angle of exit may be calculated by the following Equation (12):

$$\theta_{Lu} = (-\sin^{-1}(\frac{L_{Lo}}{\sqrt{L_{Lu}^2 + (R - r_L)^2}}) + \cos^{-1}(\frac{R - r_L}{\sqrt{L_{Lu}^2 + (R - r_L)^2}})) \times \frac{180}{\pi} \, [degree]$$

... Equation (12)

In Equation (12), $\theta_{Lu}$ denotes the second angle of exit.

The entry roll may support an upper surface of the entry part of the material, the first exit roll may support an upper surface of the first exit part of the material, and the second exit roll may support a bottom surface of the second exit part of the material.

In embodiments, the slitter may further include a monitoring device, and the monitoring device may be configured to calculate the angle of entry, based on the vertical moving distance of the entry roll, calculate the first angle of exit, based on the vertical moving distance of the first exit roll, and calculate the second angle of exit, based on the vertical moving distance of the second exit roll.

[Advantageous Effects]

According to embodiments of the present disclosure, angles of entry and exit of material can be monitored in real time using vertical moving distances of guide rolls (i.e., an entry roll, a first exit roll, and a second exit roll) configured to adjust the angles of entry and exit of the material.

In addition, according to embodiments of the present disclosure, when the angles of entry and exit of the material are theoretically derived using a trigonometric function, the angles of entry and exit of the material can be accurately derived without a theoretical error by considering contact points between the material and the guide rolls (i.e., the entry roll and the first and second exit rolls) and a contact point between the material and the knife. Therefore, it is possible to accurately monitor the angles of entry and exit of the material, which are major factors of the slitting process, and improve the reliability of a product manufactured through the slitting process.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

[Brief Description of the Drawings]

FIG. 1 is a perspective view of a slitter according to embodiments of the present disclosure.

FIG. 2 is a block diagram of some components of a slitter according to embodiments of the present disclosure.

FIG. 3 is a diagram schematically illustrating a method of calculating an angle of entry of an entry part of material in a slitter according to embodiments of the present disclosure.

FIG. 4 is a schematic view of a part of a slitter according to embodiments of the present disclosure.

FIG. 5 is a diagram schematically illustrating a method of calculating a first angle of exit of a first exit part of material in a slitter according to embodiments of the present disclosure.

FIG. 6 is a diagram schematically illustrating a method of calculating a second angle of exit of a second exit part of the material in a slitter according to embodiments of the present disclosure.

FIG. 7 is a diagram schematically illustrating a method of calculating an angle of entry of an entry part of the material in a slitter according to embodiments of the present disclosure.

FIG. 8 is a diagram schematically illustrating a method of calculating a first angle of exit of a first exit part of material in a slitter according to embodiments of the present disclosure.

FIG. 9 is a diagram schematically illustrating a method of calculating a second angle of exit of a second exit part of the material in a slitter according to embodiments of the present disclosure.

[Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

In addition, well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

In the present disclosure, a vertical direction may be a Z-axis direction, and a horizontal direction may be an X-axis direction or a Y-axis direction. A vertical position may be a position in the vertical direction, a vertical movement may be a movement in the vertical direction, a vertical moving distance may be a distance moved in the vertical direction, and a horizontal distance may be a distance in the horizontal direction.

(First Embodiment)

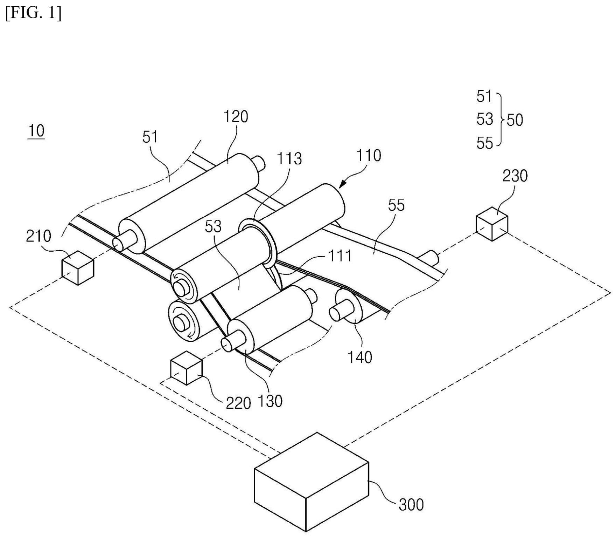

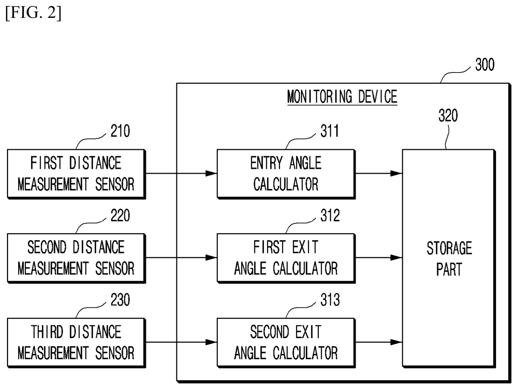

FIG. 1 is a perspective view of a slitter 10 according to embodiments of the present disclosure. FIG. 2 is a block diagram of some components of the slitter 10 according to embodiments of the present disclosure.

Referring to FIGS. 1 and 2, the slitter 10 may perform a slitting process on material 50. The slitter 10 may cut the material 50 in a direction parallel to a moving direction of the material 50 to divide the material 50 into a plurality of segments. Through the slitting process, each of the plurality of segments of the material 50 is cut to a desired width.

The material 50 may be in the form of a sheet. In embodiments, the material 50 may be electrode material for manufacture of a secondary battery. The electrode material may include a substrate and an electrode slurry layer applied to at least one of opposite surfaces of the substrate. The substrate may be a current collector including, for example, copper or aluminum. The electrode slurry layer may include a positive electrode active material or a negative electrode active material.

In the slitter 10, the material 50 may be moved along a predetermined transfer path. In the slitter 10, the material 50 may be configured to be moved along the predetermined transfer path in a roll-to-roll manner. A supply roller for storing the material 50 wound in the form of a roll may be provided at a start point of the transfer path of the material 50, and winding rollers for winding and storing segments of the material 50 divided by the slitting process may be provided at an end point of the transfer path of the material 50.

The slitter 10 may include a cutter 110, an entry roll 120, a first exit roll 130, a second exit roll 140, a first distance measurement sensor 210, a second distance measurement sensor 220, a third distance measurement sensor 230, and a monitoring device 300.

The cutter 110 may be configured to cut the material 50 in a direction parallel to a moving direction of the material 50. The cutter 110 may include a first knife 111 and a second knife 113 that are arranged in the vertical direction (the Z-axis direction). Each of the first knife 111 and the second knife 113 may be a circular knife. When viewed in a cross-sectional view, a profile of an outer edge of the first knife 111 and a profile of an outer edge of the second knife 113 may each be a circle having a uniform diameter. The first knife 111 may be provided under the material 50, and the second knife 113 may be provided on the material 50.

Each of the first knife 111 and the second knife 113 may be rotated about a rotary shaft parallel to a width direction (e.g., the Y-axis direction) of the material 50. During the rotation of the first knife 111 and the second knife 113, the material 50 passing through a gap between the first knife 111 and the second knife 113 may be cut. The cutter 110 may cut the material 50 to divided the material 50 into a first exit part 53 and a second exit part 55. FIG. 1 illustrates that the material 50 is divided into two segments by the cutter 110, but embodiments are not limited thereto, and the cutter 110 may include a plurality of knife sets arranged in the width direction (e.g., the Y-axis direction) of the material 50 and divide the material 50 into three or more segments.

The entry roll 120 may support an entry part 51 of the material 50 approaching the cutter 110 and guide the movement of the entry part 51 of the material 50. The entry roll 120 may be provided on the entry part 51 of the material 50 and support an upper surface of the entry part 51 of the material 50. The entry roll 120 may be configured to be rotated about a rotary shaft parallel to the width direction (e.g., the Y-axis direction) of the material 50. When viewed in a cross-sectional view, a profile of an outer edge of the entry roll 120 in contact with the material 50 may be a circle having a uniform diameter.

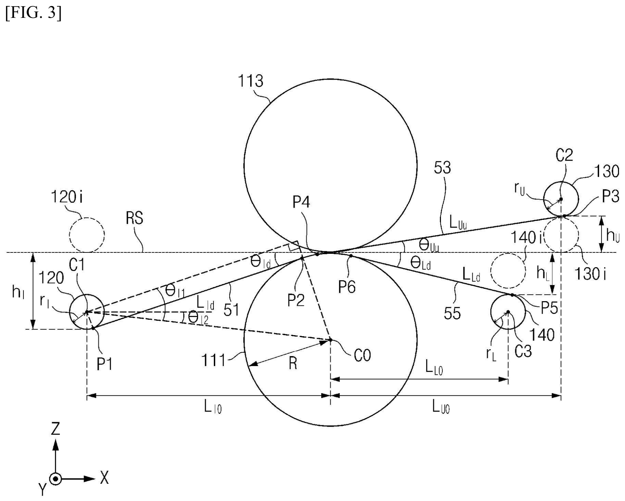

The entry roll 120 may be connected to an actuator and configured to move in the vertical direction (the Z-axis direction). The actuator may include a motor, a hydraulic cylinder, a pneumatic cylinder, or a combination thereof. The entry roll 120 may move vertically in contact with the material 50 to adjust an angle of entry formed by the entry part 51 of the material 50 approaching the cutter 110 with respect to a reference plane (RS of FIG. 3). Here, the reference plane RS may be defined as an arbitrary XY plane vertical to the vertical direction (the Z-axis direction) and be in contact with an uppermost end of the first knife 111. The angle of entry may be defined as an angle formed by a portion of the entry part 51 of the material 50, which extends between the entry roll 120 and the cutter 110, with respect to the reference plane RS.

The first exit roll 130 may support the first exit part 53 of the material 50 away from the cutter 110 and guide a movement of the first exit part 53 of the material 50. The first exit roll 130 may be provided on the first exit part 53 of the material 50 and support an upper surface of the first exit part 53 of the material 50. The first exit roll 130 may be configured to be rotated about the rotary shaft parallel to the width direction (e.g., the Y-axis direction) of the material 50. When viewed in a cross-sectional view, a profile of an outer edge of the first exit roll 130 in contact with the material 50 may be a circle having a uniform diameter.

The first exit roll 130 may be connected to an actuator and configured to move in the vertical direction (the Z-axis direction). The actuator may include a motor, a hydraulic cylinder, a pneumatic cylinder, or a combination thereof. The first exit roll 130 may move vertically in contact with the first exit part 53 of the material 50 to adjust a first angle of exit formed by the first exit part 53 of the material 50 with respect to the reference plane RS. Here, the first angle of exit may be defined as an angle formed by a portion of the first exit part 53 of the material 50, which extends between the first exit roll 130 and the cutter 110, with respect to the reference plane RS.

The second exit roll 140 may support the second exit part 55 of the material 50 away from the cutter 110 and guide a movement of the second exit part 55 of the material 50. The second exit roll 140 may be provided under the second exit part 55 of the material 50 and support a bottom surface of the second exit part 55 of the material 50. The second exit roll 140 may be configured to be rotated about the rotary shaft parallel to the width direction (e.g., the Y-axis direction) of the material 50. When viewed in a cross-sectional view, a profile of an outer edge of the second exit roll 140 in contact with the material 50 may be a circle having a uniform diameter.

The second exit roll 140 may be connected to an actuator and configured to move in the vertical direction (the Z-axis direction). The actuator may include a motor, a hydraulic cylinder, a pneumatic cylinder, or a combination thereof. The second exit roll 140 may move vertically in contact with the second exit part 55 of the material 50 to adjust a second angle of exit formed by the second exit part 55 of the material 50 with respect to the reference plane RS. Here, the second angle of exit may be defined as an angle formed by a portion of the second exit part 55 of the material 50, which extends between the second exit roll 140 and the cutter 110, with respect to the reference plane RS.

The first distance measurement sensor 210 may detect a vertical position of the entry roll 120 and a vertical moving distance of the entry roll 120. The first distance measurement sensor 210 may include a contact type displacement sensor or a non-contact type displacement sensor. In embodiments, when a reference position of the entry roll 120 is defined as a position of the entry roll 120 whose lower end is in contact with the reference plane RS, the first distance measurement sensor 210 may detect a vertical moving distance by which the entry roll 120 moves from the reference position of the entry roll 120 in the vertical direction (the Z-axis direction) and output information about the vertical moving distance.

The second distance measurement sensor 220 may detect a vertical position of the first exit roll 130 and a vertical moving distance of the first exit roll 130. The second distance measurement sensor 220 may include a contact type displacement sensor or a non-contact type displacement sensor. In embodiments, when a reference position of the first exit roll 130 is defined as a position of the first exit roll 130 whose lower end is in contact with the reference plane RS, the second distance measurement sensor 220 may detect a vertical moving distance by which the first exit roll 130 moves from the reference position of the first exit roll 130 in the vertical direction (the Z-axis direction) and output information about the vertical moving distance.

The third distance measurement sensor 230 may detect a vertical position of the second exit roll 140 and a vertical moving distance of the second exit roll 140. The third distance measurement sensor 230 may include a contact type displacement sensor or a non-contact type displacement sensor. In embodiments, when a reference position of the second exit roll 140 is defined as a position of the second exit roll 140 whose lower end is in contact with the reference plane RS, the third distance measurement sensor 230 may detect a vertical moving distance by the second exit roll 140 moves from the reference position of the second exit roll 140 in the vertical direction (the Z-axis direction) and output information about the vertical moving distance.

The monitoring device 300 may receive data output from the first to third distance measurement sensors 210, 220, and 230, and calculate the angle of entry of the entry part 51 of the material 50, the first angle of exit of the first exit part 53 of the material 50, and the second angle of exit of the second exit part 55 of the material 50. The monitoring device 300 may provide an external operator in real time with the angle of entry of the entry part 51 of the material 50, the first angle of exit of the first exit part 53 of the material 50, and the second angle of exit of the second exit part 55 of the material 50 through a display part. The monitoring device 300 may determine whether each of the angle of entry of the entry part 51 of the material 50, the first angle of exit of the first exit part 53 of the material 50, and the second angle of exit of the second exit part 55 of the material 50 reaches a predetermined target value or is in a target range.

The monitoring device 300 may include at least one memory device configured to store data, at least one processor configured to process data, and a control panel. For example, the at least one memory device may include a random access memory (RAM) and/or a read-only memory (ROM). The at least one processor may include a central processing unit (CPU), a microprocessor unit (MPU), and/or a graphic processing unit (GPU). The monitoring device 300 may include a computer and/or a server.

The monitoring device 300 may include an entry angle calculator 311, a first exit angle calculator 312, a second exit angle calculator 313, and a storage part 320.

The entry angle calculator 311 may receive data about a vertical moving distance of the entry roll 120 from the first distance measurement sensor 210, and calculate an angle of entry of the entry part 51 of the material 50 on the basis of the vertical moving distance of the entry roll 120. The first exit angle calculator 312 may receive data about a vertical moving distance of the first exit roll 130 from the second distance measurement sensor 220, and calculate a first angle of exit of the first exit part 53 of the material 50 on the basis of the vertical moving distance of the first exit roll 130. The second exit angle calculator 313 may receive data about a vertical moving distance of the second exit roll 140 from the third distance measurement sensor 230, and calculate a second angle of exit of the second exit part 55 of the material 50 on the basis of the vertical moving distance of the second exit roll 140. Each of the entry angle calculator 311, the first exit angle calculator 312, and the second exit angle calculator 313 may include at least one processor configured to process data.

The storage part 320 may store various data, such as data about the angle of entry of the entry part 51 of the material 50 calculated by the entry angle calculator 311, data about the first angle of exit of the first exit part 53 of the material 50 calculated by the first exit angle calculator 312, and data about the second angle of exit of the second exit part 55 of the material 50 calculated by the second exit angle calculator 313. The storage part 320 may include a memory device.

(Second embodiment)

FIG. 3 is a diagram schematically illustrating a method of calculating an angle of entry $\theta_{Id}$ of the entry part 51 of the material 50 in the slitter 10 according to embodiments of the present disclosure.

Hereinafter, the method of calculating the angle of entry $\theta_{Id}$ of the entry part 51 of the material 50 when the entry roll 120 moves downward from the reference plane RS will be described with reference to FIGS, 1, 2 and 3. In FIG. 3, reference numeral "120i" denotes a reference position of the entry roll 120.

First, the entry angle calculator 311 of the monitoring device 300 may calculate a first inter-contact-point distance $L_{Id}$ between a contact point P1 between the entry roll 120 and the entry part 51 of the material 50 and a contact point P2 between the first knife 111 and the entry part 51 of the material 50, based on a vertical moving distance $h_I$ of the entry roll 120 transmitted from the first distance measurement sensor 210. When a circle formed by an outer edge of the entry roll 120 and a circle formed by an outer edge of the first knife 111 have a common internal tangent, the contact point P1 between the entry roll 120 and the entry part 51 of the material 50 and the contact point P2 between the first knife 111 and the entry part 51 of the material 50 may be on the common internal tangent. The vertical moving distance $h_I$ of the entry roll 120 is a value output from the first distance measurement sensor 210, i.e., a distance by which the entry roll 120 moves downward from the reference position of the entry roll 120 in the vertical direction (the Z-axis direction).

In embodiments, the entry angle calculator 311 calculates the first inter-contact-point distance $L_{Id}$, based on the vertical moving distance $h_I$ of the entry roll 120, a horizontal distance $L_{IO}$ between a center C1 of the entry roll 120 and a center C0 of the first knife 111 in the horizontal direction (the X-axis direction), a radius $r_I$ of the entry roll 120, and a radius R of the first knife 111. The center C1 of the entry roll 120 may be a center of a circle formed by the outer edge of the entry roll 120 in contact with the material 50, and the center C0 of the first knife 111 may be a center of a circle formed by the outer edge of the first knife 111 in contact with the material 50. The first inter-contact-point distance $L_{Id}$ may be calculated by the following Equation (1):

$$L_{Id} = \sqrt{L_{Io}^2 + (h_I - R - r_I)^2 - (R + r_I)^2}$$

$$\dots \text{Equation (1)}$$

The vertical moving distance $h_I$ of the entry roll 120 may be provided from the first distance measurement sensor 210. The horizontal distance $L_{IO}$ between the center C1 of the entry roll 120 and the center C0 of the first knife 111 in the horizontal direction (the X-axis direction), the radius n of the entry roll 120, and the radius R of the first knife 111 may be provided from the storage part 320.

Next, the entry angle calculator 311 may calculate the angle of entry $\theta_{Id}$ of the entry part 51 of the material 50, based on the first inter-contact-point distance $L_{Id}$. In embodiments, the entry angle calculator 311 may calculate the entry angle $\theta_{Id}$ of the entry part 51 of the material 50, based on the first inter-contact-point distance $L_{Id}$, the radius $r_I$ of the entry roll 120, and the radius R of the first knife 111. The angle of entry $\theta_{Id}$ of the entry part 51 of the material 50 may have a negative value when the entry roll 120 moves downward from a reference position. The angle of entry $\theta_{Id}$ may be calculated by the following Equation (2):

$$\theta_{Id} = \left(-\sin^{-1}\left(\frac{R+r_I}{\sqrt{L_{Id}{}^2+(R+r_I)^2}}\right) + \cos^{-1}\left(\frac{L_{Io}}{\sqrt{L_{Id}{}^2+(R+r_I)^2}}\right)\right) \times \frac{180}{\pi} \quad [degree]$$

$$\dots \text{Equation (2)}$$

In Equation (2) above, $\sin^{-1}\left(\dfrac{R+r_I}{\sqrt{L_{Id}{}^2+(R+r_I)^2}}\right)$ may denote an angle corresponding to $\theta_{I1}$ of FIG. 3,

$\cos^{-1}\left(\dfrac{L_{Io}}{\sqrt{L_{Id}{}^2+(R+r_I)^2}}\right)$ and may denote an angle corresponding to $\theta_{I2}$ of FIG. 3.

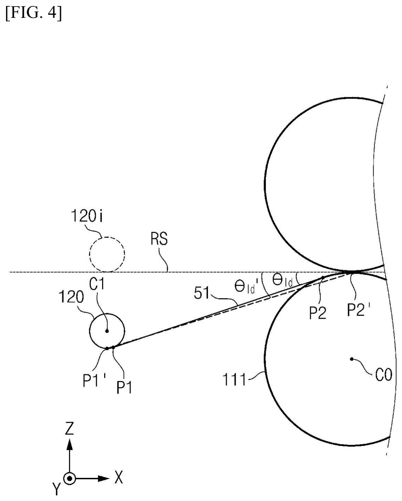

FIG. 4 is a schematic view of a part of the slitter 10 according to embodiments of the present disclosure.

Referring to FIGS. 1 to 4, by a method of calculating an angle of entry according to a comparative example, an angle of entry $\theta_{Id}{}'$ of the entry part 51 of the material 50 may be calculated by calculating an angle formed between the reference plane RS and a straight line passing through one of the quarter points P1' of a circle defined by an outer edge of the entry roll 120, and one of the quarter points P2' of a circle defined by an outer edge of the first knife 111. However, as shown in FIG. 4, the angle of entry $\theta_{Id}{}'$ calculated by the method of calculating an angle of entry according to the comparative example is different from the entry angle $\theta_{Id}$ calculated by considering the contact point P1 between the entry roll 120 and the entry part 51 of the material 50 and the contact point P2 between the first knife 111 and the entry part 51 of the material 50.

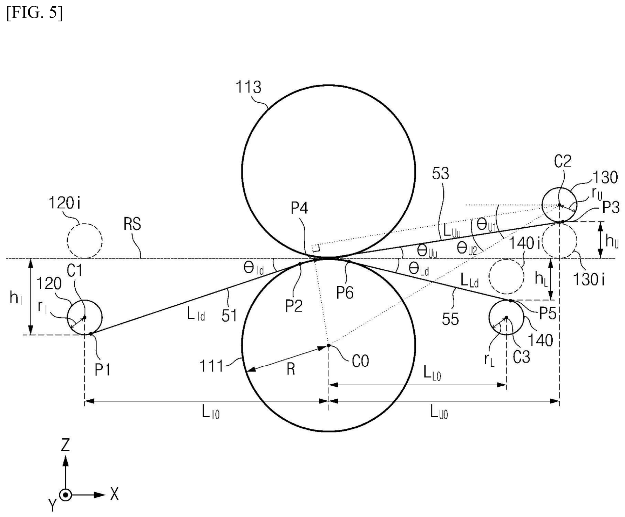

FIG. 5 is a diagram schematically illustrating a method of calculating a first angle of exit $\theta_{Uu}$ of the first exit part 53 of the material 50 in the slitter 10 according to embodiments of the present disclosure.

Hereinafter, the method of calculating the first angle of exit $\theta_{Uu}$ of the first exit part 53 of the material 50 when the first exit roll 130 moves upward from the reference plane RS will be described with reference to FIGS, 1, 2 and 5. In FIG. 5, reference numeral "130i" denotes a reference position of the first exit roll 130.

First, the first exit angle calculator 312 of the monitoring device 300 may calculate a second inter-contact-point distance $L_{Uu}$ between a contact point P3 between the first exit roll 130 and the first exit part 53 of the material 50 and a contact point P4 between the first knife 111 and the first exit part 53 of the material 50, based on a vertical moving distance hu of the first exit roll 130 transmitted from the second distance measurement sensor 220. When a circle formed by an outer edge of the first exit roll 130 and a circle formed by an outer edge of the first knife 111 have a common internal tangent, the contact point P3 between the first exit roll 130 and the first exit part 53 of the material 50 and the contact point P4 between the first knife 111 and the first exit part 53 of the material 50 may be on the common internal tangent. The vertical moving distance hu of the first exit roll 130 is a value output from the second distance measurement sensor 220, i.e., a distance by which the first exit roll 130 moves upward from the reference position of the first exit roll 130 in the vertical direction (the Z-axis direction).

In embodiments, the first exit angle calculator 312 calculates the second inter-contact-point distance $L_{Uu}$, based on the vertical moving distance hu of the first exit roll 130, a horizontal distance Luo between a center C2 of the first exit roll 130 and the center C0 of the first knife 111 in the horizontal direction (the X-axis direction), a radius ru of the first exit roll 130, and the radius R of the first knife 111. The center C2 of the first exit roll 130 may be a center of a circle formed by an outer edge of the first exit roll 130 in contact with the material 50. The second inter-contact-point distance $L_{Uu}$ may be calculated by the following Equation (3):

$$L_{Uu} = \sqrt{L_{Uo}{}^2 + (h_U + R + r_U)^2 - (R + r_U)^2}$$

$$\dots \text{Equation (3)}$$

The vertical moving distance hu of the first exit roll 130 may be provided from the second distance measurement sensor 220. The horizontal distance Luo between the center C2 of the first exit roll 130 and the center C0 of the first knife 111 in the horizontal direction (the X-axis direction), the radius $r_U$ of the first exit roll 130, and the radius R of the first knife 111 may be provided from the storage part 320.

Next, the first exit angle calculator 312 may calculate the first angle of exit $\theta_{Uu}$ of the first exit part 53 of the material 50, based on the second inter-contact-point distance $L_{Uu}$. In embodiments, the first exit angle calculator 312 may calculate the first angle of exit $\theta_{Uu}$ of the first exit part 53 of the material 50, based on the second inter-contact-point distance $L_{Uu}$, the radius $r_U$ of the first exit roll 130, and the radius R of the first knife 111. When the first exit roll 130 moves upward from a reference position, the first angle of exit $\theta_{Uu}$ of the first exit part 53 of the material 50 may have a positive value. The first angle of exit $\theta_{Uu}$ may be calculated by the following Equation (4):

$$\theta_{Uu} = \left( \sin^{-1}\left( \frac{h_U + R + r_U}{\sqrt{L_{Uu}^2 + (R + r_U)^2}} \right) - \cos^{-1}\left( \frac{L_{Uu}}{\sqrt{L_{Uu}^2 + (R + r_U)^2}} \right) \right) \times \frac{180}{\pi} \ [degree]$$

... Equation (4)

In Equation (4) above, $\sin^{-1}\left( \frac{h_U + R + r_U}{\sqrt{L_{Uu}^2 + (R + r_U)^2}} \right)$ may denote an angle corresponding to $\theta_{U1}$ of FIG. 5, and

$\cos^{-1}\left( \frac{L_{Uu}}{\sqrt{L_{Uu}^2 + (R + r_U)^2}} \right)$ may denote an angle corresponding to $\theta_{U2}$ of FIG. 5.

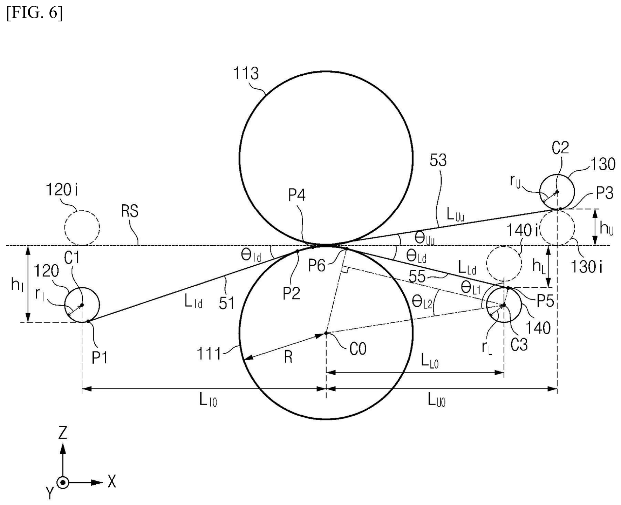

FIG. 6 is a diagram schematically illustrating a method of calculating a second angle of exit $\theta_{Ld}$ of the second exit part 55 of the material 50 in the slitter 10 according to embodiments of the present disclosure.

Hereinafter, the method of calculating the second angle of exit $\theta_{Ld}$ of the second exit part 55 of the material 50 when the second exit roll 140 moves downward from the reference plane RS will be described with reference to FIGS, 1, 2 and 6. In FIG. 6, reference numeral "140i" denotes a reference position of the second exit roll 140.

First, the second exit angle calculator 313 of the monitoring device 300 may calculate a third inter-contact-point distance $L_{Ld}$ between a contact point P5 between the second exit roll 140 and the second exit part 55 of the material 50 and a contact point P6 between the first knife 111 and the second exit part 55 of the material 50, based on a vertical moving distance $h_L$ of the second exit roll 140 transmitted from the third distance measurement sensor 230. When a circle formed by an outer edge of the second exit roll 140 and a circle formed by an outer edge of the first knife 111 have a common internal tangent, the contact point P5 between the second exit roll 140 and the second exit part 55 of the material 50 and the contact point P6 between the first knife 111 and the second exit part 55 of the material 50 may be on the common internal tangent. The vertical moving distance $h_L$ of the second exit roll 140 is a value output from the third distance measurement sensor 230, i.e., a distance by which the second exit roll 140 moves downward from the reference position of the second exit roll 140 in the vertical direction (the Z-axis direction).

In embodiments, the second exit angle calculator 313 calculates the third inter-contact-point distance $L_{Ld}$, based on the vertical moving distance $h_L$ of the second exit roll 140, a horizontal distance $L_{LO}$ between a center C3 of the second exit roll 140 and the center C0 of the first knife 111 in the horizontal direction (the X-axis direction), a radius $r_L$ of the second exit roll 140, and the radius R of the first knife 111. The center C3 of the second exit roll 140 may be a center of a circle formed by an outer edge of the second exit roll 140 in contact with the material 50. The third inter-contact-point distance $L_{Ld}$ may be calculated by the following Equation (5):

$$L_{Ld} = \sqrt{L_{Lo}^2 + (h_L - R + r_L)^2 - (R - r_L)^2}$$

... Equation (5)

The vertical moving distance $h_L$ of the second exit roll 140 may be provided from the third distance measurement sensor 230. The horizontal distance $L_{LO}$ between the center C3 of the second exit roll 140 and the center C0 of the first knife 111 in the horizontal direction (the X-axis direction), the radius $r_L$ of the second exit roll 140, and the radius R of the first knife 111 may be provided from the storage part 320.

Next, the second exit angle calculator 313 may calculate the second angle of exit $\theta_{Ld}$ of the second exit part 55 of the material 50, based on the third inter-contact-point distance $L_{Ld}$. In embodiments, the second exit angle calculator 313 may calculate the second angle of exit $\theta_{Ld}$ of the second exit part 55 of the material 50, based on the third inter-contact-point distance $L_{Ld}$, the radius $r_L$ of the second exit roll 140, and the radius R of the first knife 111. When the second exit roll 140 moves downward from a reference position, the second angle of exit $\theta_{Ld}$ of the second exit part 55 of the material 50 may have a negative value. The second angle of exit $\theta_{Ld}$ may be calculated by the following Equation (6):

$$\theta_{Ld} = \left( \cos^{-1}\left( \frac{h_L - R + r_L}{\sqrt{L_{Ld}^2 + (R - r_L)^2}} \right) - \cos^{-1}\left( \frac{L_{Ld}}{\sqrt{L_{Ld}^2 + (R - r_L)^2}} \right) \right) \times \frac{180}{\pi} - 90 \ [degree]$$

... Equation (6)

In Equation (6) above, $\cos^{-1}\left( \frac{h_L - R + r_L}{\sqrt{L_{Ld}^2 + (R - r_L)^2}} \right)$ may denote an angle corresponding to $\theta_{L1}$ of FIG. 6, and

$$\cos^{-1}\left(\frac{L_{Ld}}{\sqrt{L_{Ld}^2+(R-r_L)^2}}\right) \quad \text{may denote an angle corresponding to } \theta_{L2} \text{ of FIG. 6.}$$

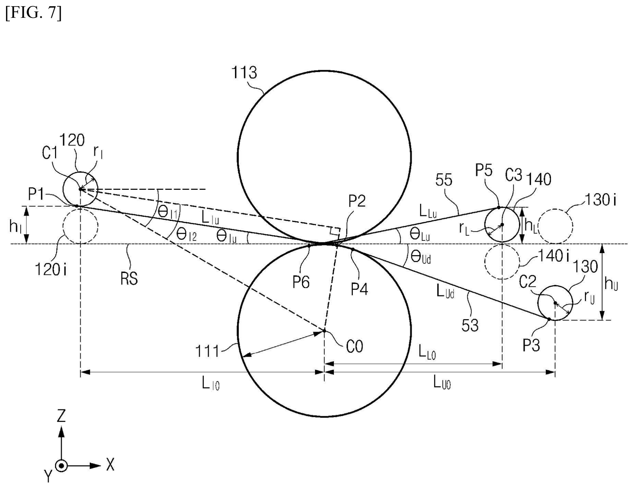

FIG. 7 is a diagram schematically illustrating a method of calculating an angle of entry $\theta_{lu}$ of the entry part 51 of the material 50 in the slitter 10 according to embodiments of the present disclosure.

Hereinafter, the method of calculating the angle of entry $\theta_{lu}$ of the entry part 51 of the material 50 when the entry roll 120 moves upward from the reference plane RS will be described with reference to FIGS, 1, 2 and 7.

First, the entry angle calculator 311 of the monitoring device 300 may calculate a first inter-contact-point distance $L_{lu}$ between the contact point P1 between the entry roll 120 and the entry part 51 of the material 50 and the contact point P2 between the first knife 111 and the entry part 51 of the material 50, based on a vertical moving distance $h_l$ of the entry roll 120 transmitted from the first distance measurement sensor 210. The vertical moving distance $h_l$ of the entry roll 120 is a value output from the first distance measurement sensor 210, i.e., a distance by which the entry roll 120 moves upward from the reference position of the entry roll 120 in the vertical direction (the Z-axis direction).

In embodiments, the entry angle calculator 311 calculates the first inter-contact-point distance $L_{ldu}$, based on the vertical moving distance $h_l$ of the entry roll 120, the horizontal distance $L_{lO}$ between the center C1 of the entry roll 120 and the center C0 of the first knife 111 in the horizontal direction (the X-axis direction), the radius $r_l$ of the entry roll 120, and the radius R of the first knife 111. The first inter-contact-point distance $L_{lu}$ may be calculated by the following Equation (7):

$$L_{lu} = \sqrt{L_{lo}^2 + (h_l + R + r_l)^2 - (R + r_l)^2} \qquad \ldots \text{Equation (7)}$$

The vertical moving distance $h_l$ of the entry roll 120 may be provided from the first distance measurement sensor 210. The horizontal distance $L_{lO}$ between the center C1 of the entry roll 120 and the center C0 of the first knife 111 in the horizontal direction (the X-axis direction), the radius n of the entry roll 120, and the radius R of the first knife 111 may be provided from the storage part 320.

Next, the entry angle calculator 311 may calculate the angle of entry $\theta_{lu}$ of the entry part 51 of the material 50, based on the first inter-contact-point distance $L_{lu}$. In embodiments, the entry angle calculator 311 may calculate the entry angle $\theta_{lu}$ of the entry part 51 of the material 50, based on the first inter-contact-point distance $L_{lu}$, the radius $r_l$ of the entry roll 120, and the radius R of the first knife 111. The angle of entry $\theta_{lu}$ of the entry part 51 of the material 50 may have a positive value when the entry roll 120 moves upward from a reference position. The angle of entry $\theta_{lu}$ may be calculated by the following Equation (8):

$$\theta_{lu} = \left(\sin^{-1}\left(\frac{h_l+R+r_l}{\sqrt{L_{lu}^2+(R+r_l)^2}}\right) - \cos^{-1}\left(\frac{L_{lu}}{\sqrt{L_{lu}^2+(R+r_l)^2}}\right)\right) \times \frac{180}{\pi} \quad [degree] \qquad \ldots \text{Equation (8)}$$

In Equation (8) above, $\sin^{-1}\left(\frac{h_l+R+r_l}{\sqrt{L_{lu}^2+(R+r_l)^2}}\right)$ may denote an angle corresponding to $\theta_{l1}$ of FIG. 7, and

$\cos^{-1}\left(\frac{L_{lu}}{\sqrt{L_{lu}^2+(R+r_l)^2}}\right)$ may denote an angle corresponding to $\theta_{l2}$ of FIG. 7.

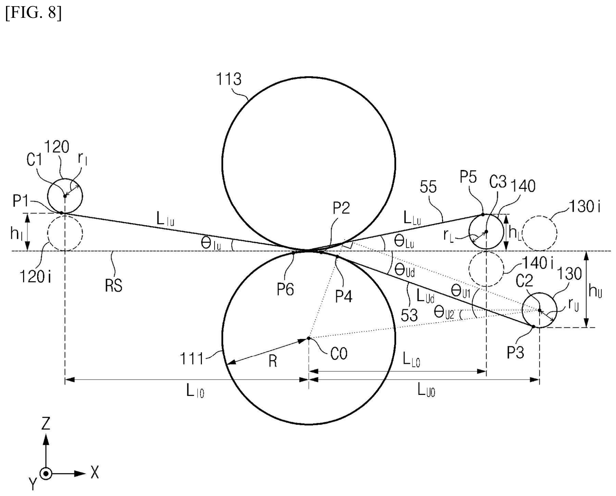

FIG. 8 is a diagram schematically illustrating a method of calculating a first angle of exit $\theta_{Ud}$ of the first exit part 53 of the material 50 in the slitter 10 according to embodiments of the present disclosure.

Hereinafter, the method of calculating the first angle of exit $\theta_{Ud}$ of the first exit part 53 of the material 50 when the first exit roll 130 moves downward from the reference plane RS will be described with reference to FIGS, 1, 2 and 8.

First, the first exit angle calculator 312 of the monitoring device 300 may calculate a second inter-contact-point distance $L_{Ud}$ between the contact point P3 between the first exit roll 130 and the first exit part 53 of the material 50 and the contact point P4 between the first knife 111 and the first exit part 53 of the material 50, based on a vertical moving distance hu of the first exit roll 130 transmitted from the second distance measurement sensor 220. The vertical moving distance hu of the first exit roll 130 is a value output from the second distance measurement sensor 220, i.e., a distance by which the first exit roll 130 moves downward from the reference position of the first exit roll 130 in the vertical direction (the Z-axis direction).

In embodiments, the first exit angle calculator 312 calculates the second inter-contact-point distance $L_{Ud}$, based on the vertical moving distance hu of the first exit roll 130, the horizontal distance Luo between the center C2 of the first exit roll 130 and the center C0 of the first knife 111 in the horizontal direction (the X-axis direction), the radius $r_U$ of the first exit roll 130, and the radius R of the first knife 111. The second inter-contact-point distance $L_{Ud}$ may be calculated by the following Equation (9):

$$L_{Ud} = \sqrt{L_{Uo}^2 + (h_U - R - r_U)^2 - (R + r_U)^2}$$

...Equation (9)

The vertical moving distance hu of the first exit roll 130 may be provided from the second distance measurement sensor 220. The horizontal distance Luo between the center C2 of the first exit roll 130 and the center C0 of the first knife 111 in the horizontal direction (the X-axis direction), the radius $r_U$ of the first exit roll 130, and the radius R of the first knife 111 may be provided from the storage part 320.

Next, the first exit angle calculator 312 may calculate the first angle of exit $\theta_{Ud}$ of the first exit part 53 of the material 50, based on the second inter-contact-point distance $L_{Ud}$. In embodiments, the first exit angle calculator 312 may calculate the first angle of exit $\theta_{Ud}$ of the first exit part 53 of the material 50, based on the second inter-contact-point distance $L_{Ud}$, the radius ru of the first exit roll 130, and the radius R of the first knife 111. When the first exit roll 130 moves downward from a reference position, the first angle of exit $\theta_{Ud}$ of the first exit part 53 of the material 50 may have a negative value. The first angle of exit $\theta_{Ud}$ may be calculated by the following Equation (10):

$$\theta_{Ud} = \left(-\sin^{-1}\left(\frac{R+r_U}{\sqrt{L_{Ud}^2+(R+r_U)^2}}\right) + \cos^{-1}\left(\frac{L_{Uo}}{\sqrt{L_{Ud}^2+(R+r_U)^2}}\right)\right) \times \frac{180}{\pi} \; [degree]$$

... Equation (10)

In Equation (10) above, $\sin^{-1}\left(\frac{R+r_U}{\sqrt{L_{Ud}^2+(R+r_U)^2}}\right)$ may denote an angle corresponding to $\theta_{U1}$ of FIG. 8, and

$\cos^{-1}\left(\frac{L_{Uo}}{\sqrt{L_{Ud}^2+(R+r_U)^2}}\right)$ may denote an angle corresponding to $\theta_{U2}$ of FIG. 8.

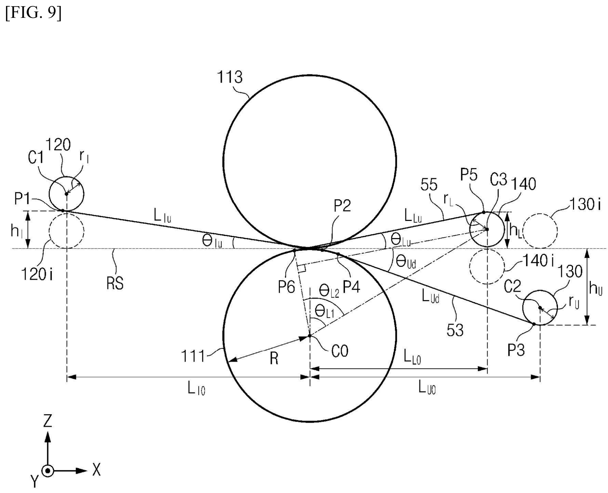

FIG. 9 is a diagram schematically illustrating a method of calculating a second angle of exit $\theta_{Lu}$ of the second exit part 55 of the material 50 in the slitter 10 according to embodiments of the present disclosure.

Hereinafter, the method of calculating the second angle of exit $\theta_{Lu}$ of the second exit part 55 of the material 50 when the second exit roll 140 moves upward from the reference plane RS will be described with reference to FIGS, 1, 2 and 9.

First, the second exit angle calculator 313 of the monitoring device 300 may calculate a third inter-contact-point distance $L_{Lu}$ between the contact point P5 between the second exit roll 140 and the second exit part 55 of the material 50 and the contact point P6 between the first knife 111 and the second exit part 55 of the material 50, based on a vertical moving distance $h_L$ of the second exit roll 140 transmitted from the third distance measurement sensor 230. The vertical moving distance $h_L$ of the second exit roll 140 is a value output from the third distance measurement sensor 230, i.e., a distance by which the second exit roll 140 moves upward from the reference position of the second exit roll 140 in the vertical direction (the Z-axis direction).

In embodiments, the second exit angle calculator 313 calculates the third inter-contact-point distance $L_{Lu}$, based on the vertical moving distance $h_L$ of the second exit roll 140, the horizontal distance $L_{LO}$ between the center C3 of the second exit roll 140 and the center C0 of the first knife 111 in the horizontal direction (the X-axis direction), the radius $r_L$ of the second exit roll 140, and the radius R of the first knife 111. The third inter-contact-point distance $L_{Lu}$ may be calculated by the following Equation (11):

$$L_{Lu} = \sqrt{L_{Lo}^2 + (h_L + R - r_L)^2 - (R - r_L)^2}$$

...Equation (11)

The vertical moving distance $h_L$ of the second exit roll 140 may be provided from the third distance measurement sensor 230. The horizontal distance $L_{LO}$ between the center C3 of the second exit roll 140 and the center C0 of the first knife 111 in the horizontal direction (the X-axis direction), the radius $r_L$ of the second exit roll 140, and the radius R of the first knife 111 may be provided from the storage part 320.

Next, the second exit angle calculator 313 may calculate the second angle of exit $\theta_{Lu}$ of the second exit part 55 of the material 50, based on the third inter-contact-point distance $L_{Lu}$. In embodiments, the second exit angle calculator 313 may calculate the second angle of exit $\theta_{Lu}$ of the second exit part 55 of the material 50, based on the third inter-contact-point distance $L_{Lu}$, the radius $r_L$ of the second exit roll 140, and the radius R of the first knife 111. When the second exit roll 140 moves upward from the reference position, the second angle of exit $\theta_{Lu}$ of the second exit part 55 of the material 50 may have a positive value. The second angle of exit $\theta_{Lu}$ may be calculated by the following Equation (12):

$$\theta_{Lu} = (-\sin^{-1}(\frac{L_{Lo}}{\sqrt{L_{Lu}^2+(R-r_L)^2}}) + \cos^{-1}(\frac{R-r_L}{\sqrt{L_{Lu}^2+(R-r_L)^2}})) \times \frac{180}{\pi} \ [degree]$$

$$\dots \text{Equation (12)}$$

In Equation (12) above, $\sin^{-1}(\frac{L_{Lo}}{\sqrt{L_{Lu}^2+(R-r_L)^2}})$ may denote an angle corresponding to $\theta_{L1}$ of FIG. 9, and

$\cos^{-1}(\frac{R-r_L}{\sqrt{L_{Lu}^2+(R-r_L)^2}})$ may denote an angle corresponding to $\theta_{L2}$ of FIG. 9.

In the slitting process, angles of entry and exit of the material 50 are major factors of the slitting process that affect the quality of a cut surface of the material 50 and the occurrence of defects such as burrs. Therefore, the angles of entry and exit of the material 50 are measured, and a vertical position of a guide roll guiding the material 50 is controlled such that the angles of entry and exit of the material 50 may have target values. In general, in the slitting process, an angle sensor may be used in a method of detecting the angles of entry and exit of the material 50. When the angle sensor is used, the angle sensor is placed on the material 50 to measure the angles of entry and exit of the material 50, and thus, the angles of entry and exit are difficult to measure because the material 50 may sag due to the weight of the angle sensor and can be measured only when the movement of the material 50 is stopped, thus preventing the angles of entry and exit of the material 50 from being measured in real time in the slitting process.

According to embodiments of the present disclosure, the angles of entry and exit of the material 50 can be monitored in real time using vertical moving distances of guide rolls (i.e., the entry roll 120, the first exit roll 130, and the second exit roll 140) that are configured to adjust the angles of entry and exit of the material 50.

In addition, according to embodiments of the present disclosure, when the angles of entry and exit of the material 50 are theoretically derived using a trigonometric function, the angles of entry and exit of the material 50 are derived in consideration of contact points between the material 50 and the guide rolls (i.e., the entry roll 120, the first exit roll 130, and the second exit roll 140) and a contact point between the material 50 and the knife, and thus can be accurately derived without a theoretical error. Therefore, it is possible to accurately monitor the angles of entry and exit of the material 50, which are the major factors of the slitting process, and improve the reliability of a product manufactured through the slitting process.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

**Claims**

1.   A slitter comprising:

a cutter including a first knife and a second knife that are arranged in a vertical direction, the cutter being configured to cut material passing between the first knife and the second knife to divide the material into a first exit part and a second exit part;
an entry roll configured to move in the vertical direction and adjust an angle of entry formed by an entry part of the material approaching the cutter with respect to a reference plane;
a first distance measurement sensor configured to detect a vertical moving distance of the entry roll, the vertical moving distance being a distance by which the entry roll moves from the reference plane in the vertical direction;
a first exit roll configured to move in the vertical direction and adjust a first angle of exit formed by the first exit part of the material with respect to the reference plane;
a second distance measurement sensor configured to detect a vertical moving distance of the first exit roll, the vertical moving distance being a distance by which the first exit roll moves from the reference plane in the vertical direction;
a second exit roll configured to move in the vertical direction and adjust a second angle of exit formed by the second exit part of the material with respect to the reference plane; and
a third distance measurement sensor configured to detect a vertical moving distance of the second exit roll, the vertical moving distance being a distance by which the second exit roll moves from the reference plane in the vertical direction.

2. The slitter of claim 1, further comprising a monitoring device configured to calculate the angle of entry, based on the vertical moving distance of the entry roll.

3. The slitter of claim 2, wherein the monitoring device is configured to:

   calculate a first inter-contact-point distance between a contact point between the entry roll and the entry part of the material and a contact point between the first knife and the entry part of the material, based on the vertical moving distance of the entry roll, a horizontal distance between a center of the entry roll and a center of the first knife in a horizontal direction, a radius of the entry roll, and a radius of the first knife; and
   calculate the angle of entry, based on the first inter-contact-point distance, the radius of the entry roll, and the radius of the first knife.

4. The slitter of claim 3, wherein, when the entry roll moves downward from the reference plane, the first inter-contact-point distance is calculated by the following Equation (1):

$$L_{Id} = \sqrt{L_{Io}^2 + (h_I - R - r_I)^2 - (R + r_I)^2} \qquad \dots \quad \text{Equation (1)},$$

   wherein in Equation (1), $L_{Id}$ denotes the first inter-contact-point distance, $L_{IO}$ denotes the horizontal distance between the center of the entry roll and the center of the first knife, $h_I$ denotes the vertical moving distance of the entry roll, R denotes the radius of the first knife, and $r_I$ denotes the radius of the entry roll, and
   when the entry roll moves downward from the reference plane, the angle of entry is calculated by the following Equation (2):

$$\theta_{Id} = \left(-\sin^{-1}\left(\frac{R+r_I}{\sqrt{L_{Id}^2+(R+r_I)^2}}\right) + \cos^{-1}\left(\frac{L_{Io}}{\sqrt{L_{Id}^2+(R+r_I)^2}}\right)\right) \times \frac{180}{\pi} \quad [degree] \qquad \dots \quad \text{Equation (2)},$$

   wherein in Equation (2), $\theta_{Id}$ denotes the angle of entry.

5. The slitter of claim 3, wherein, when the entry roll moves upward from the reference plane, the first inter-contact-point distance is calculated by the following Equation (3):

$$L_{Iu} = \sqrt{L_{Io}^2 + (h_I + R + r_I)^2 - (R + r_I)^2} \qquad \dots \quad \text{Equation (3)},$$

   wherein in Equation (3), $L_{Iu}$ denotes the first inter-contact-point distance, $L_{IO}$ denotes the horizontal distance between the center of the entry roll and the center of the first knife, $h_I$ denotes the vertical moving distance of the entry roll, R denotes the radius of the first knife, and $r_I$ denotes the radius of the entry roll, and
   when the entry roll moves upward from the reference plane, the angle of entry is calculated by the following Equation (4):

$$\theta_{Iu} = \left(\sin^{-1}\left(\frac{h_I+R+r_I}{\sqrt{L_{Iu}^2+(R+r_I)^2}}\right) - \cos^{-1}\left(\frac{L_{Iu}}{\sqrt{L_{Iu}^2+(R+r_I)^2}}\right)\right) \times \frac{180}{\pi} \quad [degree] \qquad \dots \quad \text{Equation (4)},$$

   wherein in Equation (4), $\theta_{Iu}$ denotes the angle of entry.

6. The slitter of claim 1, further comprising a monitoring device configured to calculate the first angle of exit, based on the vertical moving distance of the first exit roll.

7. The slitter of claim 6, wherein the monitoring device is configured to:

calculate a second inter-contact-point distance between a contact point between the first exit roll and the first exit part of the material and a contact point between the first knife and the first exit part of the material, based on the vertical moving distance of the first exit roll, a horizontal distance between a center of the first exit roll and a center of the first knife in a horizontal direction, a radius of the first exit roll, and a radius of the first knife; and calculate the first angle of exit, based on the second inter-contact-point distance, the radius of the first exit roll, and the radius of the first knife.

8. The slitter of claim 7, wherein, when the first exit roll moves downward from the reference plane, the second inter-contact-point distance is calculated by the following Equation (5):

$$L_{Ud} = \sqrt{L_{Uo}^2 + (h_U - R - r_U)^2 - (R + r_U)^2} \qquad \text{... Equation (5),}$$

wherein in Equation (5), $L_{Ud}$ denotes the second inter-contact-point distance, Luo denotes the horizontal distance between the center of the first exit roll and the center of the first knife, hu denotes the vertical moving distance of the first exit roll, R denotes the radius of the first knife, and ru denotes the radius of the first exit roll, and when the first exit roll moves downward from the reference plane, the first angle of exit is calculated by the following Equation (6):

$$\theta_{Ud} = (-\sin^{-1}(\frac{R+r_U}{\sqrt{L_{Ud}^2+(R+r_U)^2}}) + \cos^{-1}(\frac{L_{Uo}}{\sqrt{L_{Ud}^2+(R+r_U)^2}})) \times \frac{180}{\pi} \ [degree] \qquad \text{... Equation (6),}$$

wherein in Equation (6), $\theta_{Ud}$ denotes the first angle of exit.

9. The slitter of claim 7, wherein, when the first exit roll moves upward from the reference plane, the second inter-contact-point distance is calculated by the following Equation (7):

$$L_{Uu} = \sqrt{L_{Uo}^2 + (h_U + R + r_U)^2 - (R + r_U)^2} \qquad \text{... Equation (7),}$$

wherein in Equation (7), $L_{Uu}$ denotes the second inter-contact-point distance, Luo denotes the horizontal distance between the center of the first exit roll and the center of the first knife, hu denotes the vertical moving distance of the first exit roll, R denotes the radius of the first knife, and ru denotes the radius of the first exit roll, and when the first exit roll moves upward from the reference plane, the first angle of exit is calculated by the following Equation (8):

$$\theta_{Uu} = (\sin^{-1}(\frac{h_U+R+r_U}{\sqrt{L_{Uu}^2+(R+r_U)^2}}) - \cos^{-1}(\frac{L_{Uu}}{\sqrt{L_{Uu}^2+(R+r_U)^2}})) \times \frac{180}{\pi} \ [degree] \qquad \text{... Equation (8),}$$

wherein in Equation (8), $\theta_{Uu}$ denotes the first angle of exit.

10. The slitter of claim 1, further comprising a monitoring device configured to calculate the second angle of exit, based on the vertical moving distance of the second exit roll.

11. The slitter of claim 10, wherein the monitoring device is configured to:

calculate a third inter-contact-point distance between a contact point between the second exit roll and the second exit part of the material and a contact point between the first knife and the second exit part of the material, based on the vertical moving distance of the second exit roll, a horizontal distance between a center of the second exit roll and a center of the first knife in a horizontal direction, a radius of the second exit roll, and a radius of the first knife; and

calculate the second angle of exit, based on the third inter-contact-point distance, the radius of the second exit roll, and the radius of the first knife.

12. The slitter of claim 11, wherein, when the second exit roll moves downward from the reference plane, the third inter-contact-point distance is calculated by the following Equation (9):

$$L_{Ld} = \sqrt{L_{Lo}^2 + (h_L - R + r_L)^2 - (R - r_L)^2} \qquad \text{... Equation (9),}$$

wherein in Equation (9), $L_{Ld}$ denotes the third inter-contact-point distance, $L_{LO}$ denotes the horizontal distance between the center of the second exit roll and the center of the first knife, $h_L$ denotes the vertical moving distance of the second exit roll, R denotes the radius of the first knife, and $r_L$ denotes the radius of the second exit roll, and when the second exit roll moves downward from the reference plane, the second angle of exit is calculated by the following Equation (10):

$$\theta_{Ld} = \left(\cos^{-1}\left(\frac{h_L - R + r_L}{\sqrt{L_{Ld}^2 + (R - r_L)^2}}\right) - \cos^{-1}\left(\frac{L_{Ld}}{\sqrt{L_{Ld}^2 + (R - r_L)^2}}\right)\right) \times \frac{180}{\pi} - 90 \ [degree] \qquad \text{... Equation (10),}$$

wherein in Equation (10), $\theta_{Ld}$ denotes the second angle of exit.

13. The slitter of claim 11, wherein, when the second exit roll moves upward from the reference plane, the third inter-contact-point distance is calculated by the following Equation (11):

$$L_{Lu} = \sqrt{L_{Lo}^2 + (h_L + R - r_L)^2 - (R - r_L)^2} \qquad \text{... Equation (11),}$$

wherein in Equation (11), $L_{Lu}$ denotes the third inter-contact-point distance, $L_{LO}$ denotes the horizontal distance between the center of the second exit roll and the center of the first knife, $h_L$ denotes the vertical moving distance of the second exit roll, R denotes the radius of the first knife, and $r_L$ denotes the radius of the second exit roll, and when the second exit roll moves upward from the reference plane, the second angle of exit is calculated by the following Equation (12):

$$\theta_{Lu} = \left(-\sin^{-1}\left(\frac{L_{Lo}}{\sqrt{L_{Lu}^2 + (R - r_L)^2}}\right) + \cos^{-1}\left(\frac{R - r_L}{\sqrt{L_{Lu}^2 + (R - r_L)^2}}\right)\right) \times \frac{180}{\pi} \ [degree] \qquad \text{... Equation (12),}$$

wherein in Equation (12), $\theta_{Lu}$ denotes the second angle of exit.

14. The slitter of claim 1, wherein the entry roll supports an upper surface of the entry part of the material,

the first exit roll supports an upper surface of the first exit part of the material, and
the second exit roll supports a bottom surface of the second exit part of the material.

15. The slitter of claim 14, further comprising a monitoring device,
wherein the monitoring device is configured to:

calculate the angle of entry, based on the vertical moving distance of the entry roll;
calculate the first angle of exit, based on the vertical moving distance of the first exit roll; and
calculate the second angle of exit, based on the vertical moving distance of the second exit roll.

[FIG. 1]

[FIG. 2]

MONITORING DEVICE — 300

FIRST DISTANCE MEASUREMENT SENSOR — 210

SECOND DISTANCE MEASUREMENT SENSOR — 220

THIRD DISTANCE MEASUREMENT SENSOR — 230

ENTRY ANGLE CALCULATOR — 311

FIRST EXIT ANGLE CALCULATOR — 312

SECOND EXIT ANGLE CALCULATOR — 313

STORAGE PART — 320

[FIG. 3]

[FIG. 4]

[FIG. 5]

[FIG. 6]

[FIG. 7]

[FIG. 8]

[FIG. 9]

## INTERNATIONAL SEARCH REPORT

| International application No. |
| --- |
| **PCT/KR2025/005297** |

| A. | CLASSIFICATION OF SUBJECT MATTER |
| --- | --- |

**B26D 7/32**(2006.01)i; **B26D 1/24**(2006.01)i; **B26D 5/00**(2006.01)i; **H01M 4/04**(2006.01)i

According to International Patent Classification (IPC) or to both national classification and IPC

| B. | FIELDS SEARCHED |
| --- | --- |

Minimum documentation searched (classification system followed by classification symbols)

B26D 7/32(2006.01); B23D 19/06(2006.01); B23D 33/02(2006.01); B26D 1/24(2006.01); B30B 3/02(2006.01); B65H 23/025(2006.01); B65H 35/02(2006.01); H01M 4/04(2006.01); H01M 4/70(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬리터(slitter), 입사롤(entry roll), 출사롤(exit roll), 입사각(angle of incidence), 출사각(angle of exit), 거리측정센서(distance measuring sensor)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2022-171349 A (TOYOTA MOTOR CORPORATION) 11 November 2022 (2022-11-11) See paragraphs [0012]-[0017] and figures 1-3 and 6. | 1,14 |
| A | | 2-13,15 |
| Y | KR 10-2013-0120745 A (LG CHEM, LTD.) 05 November 2013 (2013-11-05) See paragraphs [0015] and [0019] and figures 2-5. | 1,14 |
| Y | JP 09-168918 A (KOBE STEEL LTD.) 30 June 1997 (1997-06-30) See paragraph [0016] and figure 1. | 1,14 |
| A | KR 10-2547641 B1 (SUECO ADVANCED MATERIAL CO., LTD.) 26 June 2023 (2023-06-26) See paragraphs [0031] and [0035] and figure 1. | 1-15 |
| A | JP 05-185313 A (MITSUBISHI ELECTRIC CORPORATION) 27 July 1993 (1993-07-27) See paragraph [0014] and figure 2. | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 July 2025** | **18 July 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/005297**

| Patent document cited in search report | | | Publication date (day/month/year) | Patent family member(s) | | | Publication date (day/month/year) |
|---|---|---|---|---|---|---|---|
| JP | 2022-171349 | A | 11 November 2022 | None | | | |
| KR | 10-2013-0120745 | A | 05 November 2013 | None | | | |
| JP | 09-168918 | A | 30 June 1997 | None | | | |
| KR | 10-2547641 | B1 | 26 June 2023 | KR | 10-2022-0138566 | A | 13 October 2022 |
| JP | 05-185313 | A | 27 July 1993 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240053917